# EUROPÄISCHE PATENTANMELDUNG

(11) **EP 2 184 695 A1**
(43) Veröffentlichungstag der Anmeldung: **12.05.2010**
(21) Anmeldenummer: 08019636.3
(22) Anmeldetag: 10.11.2008
(51) Int. Cl.: G06F 21/00

(54) **Verfahren zum Kombinieren von Daten mit einer zur Verarbeitung der Daten vorgesehenen Vorrichtung, korrespondierende Funktionalität zur Ausführung einzelner Schritte des Verfahrens und Computerprogram zur Implementierung des Verfahrens**

(71) Anmelder: Siemens Aktiengesellschaft, 80333 München (DE)
(72) Erfinder: Cuellar, Jorge, Dr., 82065 Baierbrunn (DE); Köpken, Hans-Georg, Dr., 91056 Erlangen (DE); Lenord, Matthias, Dr., 91088 Bubenreuth (DE); Maidl, Monika, Dr., 81675 München (DE)

(57) **Zusammenfassung**

Es werden ein Verfahren und eine zumindest zweiteilige Funktionalität zum Kombinieren von Daten mit einer zur Verarbeitung der Daten vorgesehenen Vorrichtung mit folgenden Schritten angegeben: Bestimmen einer sich auf die Vorrichtung (22-30) beziehenden Kennzeichnung (50); Generieren eines ersten und zweiten Schlüssels (52,52'), wobei der erste Schlüssel (52) anhand der Kennzeichnung (50) generiert wird und der zweite Schlüssel (52') als geheimer Schlüssel unabhängig von der Kennzeichnung (50) ist; Generieren eines zur Verwendung des zweiten Schlüssels (52') vorgesehenen Entschlüsselungsalgorithmus (54) und Bereitstellen des Entschlüsselungsalgorithmus (54) auch für die Vorrichtung (22-30); Verschlüsseln eines einen Zugriff auf die Daten erlaubenden Rechteobjekts (40) mit dem ersten Schlüssel (52) und den dem Entschlüsselungsalgorithmus (54) zugrunde liegenden zweiten Schlüssel (52'); Übermitteln der Daten und des Rechteobjekts (40) an die Vorrichtung (22-30); Entschlüsseln des Rechteobjekts (40) durch die Vorrichtung (22-30) mittels des aus deren Kennzeichnung (50) erzeugten Schlüssels und dem dieser Vorrichtung bereitgestellten Entschlüsselungsalgorithmus (54) und Entschlüsselung der Daten mit einem von dem entschlüsselten Rechteobjekt (40) umfassten Schlüssel (48).

## Beschreibung

Die Erfindung betrifft ein Verfahren zum Kombinieren von Daten mit einer zur Verarbeitung der Daten vorgesehenen Vorrichtung. Die mit der Vorrichtung zu kombinierenden Daten umfassen insbesondere als geistiges Eigentum eines Rechteinhabers eine Produktbeschreibung oder dergleichen. Die Kombination der jeweiligen Daten mit der Vorrichtung soll sicherstellen, dass die Daten nur auf der jeweiligen Vorrichtung oder im Zusammenhang mit der jeweiligen Vorrichtung verwendbar sind. Eine derartige Kombination sichert das geistige Eigentum des Rechteinhabers gegen unberechtigte Verwendung, Vervielfältigung und so weiter.

Bisherige Ansätze zur Lösung dieses Problems basieren auf der Verwendung spezieller Hardware, die gegen einen Zugriff durch Unberechtigte gesichert ist. In einem solchen Szenario können die zu übermittelnden Daten mit einem Verfahren wie es vom Digital Rights Management (DRM) bekannt ist, gesichert werden. Dabei generiert ein Rechteinhaber zumindest ein so genanntes Rechteobjekt, damit dieser bei einem Dienstleister Tätigkeiten, die er nicht selbst ausführen kann oder will, in Auftrag geben kann, ohne die Kontrolle über sein geistiges Eigentum zu verlieren. Für die Verwendung solcher Rechteobjekte generiert zunächst der Dienstleister ein Schlüsselpaar, und ein erster Schlüsselteil wird dem Rechteinhaber übermittelt, während der zweite Schlüsselteil beim Dienstleister verbleibt. Der Rechteinhaber generiert seinerseits einen dem Dienstleister unbekannten Schlüssel und bettet diesen in ein Rechteobjekt ein. Das Rechteobjekt schließlich ist mit dem vom Dienstleister erhaltenen Schlüsselteil verschlüsselt, so dass der Dienstleister bei Erhalt des Rechteobjekts dieses mit seinem Schlüsselteil entschlüsseln kann und so Zugriff auf den in dem Rechteobjekt enthaltenen Schlüssel enthält. Mit diesem Schlüssel wiederum ist ein Zugriff auf die Daten möglich.

Ein solcher Ansatz ließe aber sowohl den Schlüssel als auch die Daten in unverschlüsselter Form bei der Vorrichtung. Ein Angreifer, der sich Zugang zu der jeweiligen Vorrichtung verschafft, kann damit die Daten und/oder den Schlüssel erhalten und die jeweiligen Daten verwenden oder mit dem Schlüssel evtl. sogar Zugriff auf andere Daten erhalten. Gleiches gilt auch für den Dienstleister selbst, wenn dieser nur eingeschränkte Rechte hat, oder dessen Personal. Durch direkten Zugriff auf die Datei würden die Einschränkungen umgangen. Um dies zu verhindern, hat man bisher spezielle Hardware auf Seiten der jeweiligen Vorrichtung in Betracht gezogen, die gegen unberechtigte Zugriffe Dritter gesichert ist, so dass Dritte, also weder ein Angreifer noch der Dienstleister, in einem solchen Fall weder Zugriff auf die Daten noch den Schlüssel erhalten. Eine Hardware mit einem solchen Zugriffsschutz wird auch als "tamper-proof" bezeichnet. Derartige Hardware oder Funktionalität, die in einer solchen Hardware den Zugriffsschutz realisiert, ist jedoch teuer, so dass eine Aufgabe der Erfindung darin besteht, ein Verfahren zum Kombinieren von Daten mit einer Vorrichtung anzugeben, bei dem keine spezielle Hardware für einen ausreichenden Schutz erforderlich ist.

Diese Aufgabe wird mit einem Verfahren mit den Merkmalen des Anspruchs 1 gelöst. Dazu sind bei einem Verfahren zum Kombinieren von Daten mit einer Vorrichtung zur Verarbeitung der Daten folgende Schritte vorgesehen: Bestimmen einer sich auf die Vorrichtung beziehenden Kennzeichnung nach Art eines Fingerprints. Generieren eines ersten und eines zweiten Schlüssels, wobei der erste Schlüssel anhand der Kennzeichnung/des Fingerprints generiert wird und der zweite oder weitere Schlüssel als geheimer Schlüssel unabhängig von dem Fingerprint ist. Generieren eines zur Verwendung des zweiten, geheimen Schlüssels vorgesehenen Entschlüsselungsalgorithmus und Bereitstellen des Entschlüsselungsalgorithmus auch für die Vorrichtung. Verschlüsseln eines einen Zugriff auf die Daten erlaubenden Rechteobjekts mit dem ersten Schlüssel und dem, dem Entschlüsselungsalgorithmus zugrunde liegenden, zweiten geheimen Schlüssel. Übermitteln der Daten und des Rechteobjekts an die Vorrichtung. Entschlüsseln des Rechteobjekts durch die Vorrichtung mittels des ersten, aus der Kennzeichnung generierten Schlüssels und dem der Vorrichtung separat bereitgestellten Entschlüsselungsalgorithmus und schließlich Entschlüsseln der Daten mit einem von dem entschlüsselten Rechteobjekt umfassten Schlüssel.

Der Vorteil der Erfindung besteht in einer zweistufigen Verschlüsselung des zur jeweiligen Vorrichtung übermittelten Rechteobjekts. Die erste Verschlüsselung erfolgt dabei mit dem ersten Schlüssel, der auf die sich auf die Vorrichtung beziehende Kennzeichnung (den Fingerprint) zurückgeht, also eine Kennzeichnung, welche die jeweilige Vorrichtung von anderen Vorrichtungen unterscheidbar macht. Die zweite Verschlüsselung erfolgt mit zweiten, geheimen Schlüssel, wobei zu dem geheimen Schlüssel ein Entschlüsselungsalgorithmus generiert wird, der der jeweiligen Vorrichtung separat bereitgestellt wird. Der erste Schlüssel dient zur Bindung an die Vorrichtung, und der zweite Schlüssel, der geheim bleiben muss, dem Schutz der Daten. Auf Seiten der Vorrichtung, also einem Produktionsmittel zur Ausführung der vom Rechteinhaber in Auftrag gegebenen Dienstleistung, kann das empfangene Rechteobjekt mit deren Kennzeichnung und mit dem separat bereitgestelltem Entschlüsselungsalgorithmus entschlüsselt werden. Ein Dritter, der sich unberechtigt Zugang zu der Vorrichtung verschafft, kann möglicherweise deren Kennzeichnung auslesen, erhält aber gleichwohl keinen Zugriff zu den auf der Vorrichtung vorliegenden Daten, weil mit Kenntnis der Kennzeichnung allenfalls eine erste Stufe der Verschlüsselung aufgehoben werden kann, und ohne Aufhebung auch der zweiten Stufe der Verschlüsselung, die die Verwendung des Entschlüsselungsalgorithmus erfordert, ist ein Zugriff nicht möglich Den zweiten, geheimen Schlüssel könnte ein Angreifer erhalten, in dem er einen Speicher, auf dem der Entschlüsselungsalgorithmus der Vorrichtung bereitgestellt werde, also z.B. einen Flash-Speicher oder dergleichen, stiehlt oder kopiert. Auch dafür ist physischer Zugang nötig. Gegen den Dienstleister selbst, der ungehindert Zugriff auf seine Vorrichtungen, also auch den Flash-Speicher hat, bietet der Ansatz also nur eine deutliche technische Erschwerung gegen direkten Zugriff auf das Programm. Hier ist wichtig, dass es sich bei z.B. an einen Antrieb gesandte Daten um berechnete Sollpositionen handelt, also nicht um ein vollständiges NC-Programm. Damit ist der direkte Zugriff auf die Daten für einen einzelnen Antrieb nicht als starke Bedrohung zu sehen. Stattdessen steht bei der Erfindung im Vordergrund, dass die Daten, also z. B. Sollpositionen, an einen bestimmten Antrieb gebunden werden. Damit soll erheblich erschwert werden, dass der Dienstleister dasselbe Programm auf einer anderen Maschine nochmals ausführt, und damit eine Beschränkung einer vorgegebenen Produktionsmenge umgeht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt umfasst der der Vorrichtung bereitgestellte Entschlüsselungsalgorithmus selbst den zugrunde liegenden, zweiten und geheimen Schlüssel in verborgener Form. Damit wird erreicht, dass bei einem unberechtigten Zugriff auf die Vorrichtung der Schlüssel als solcher nicht direkt erkennbar ist, und auch bei einem evtl. unberechtigten Auslesen des Entschlüsselungsalgorithmus der Schlüssel nicht ohne weiteres erhältlich ist. Besonders bevorzugt ist dabei vorgesehen, dass der Schlüssel in dem Entschlüsselungsalgorithmus nach Methoden der so genannten White-Box-Kryptographie verborgen ist. Dieser Ansatz befasst sich speziell mit der Situation, dass ein Schlüssel an einer Stelle gespeichert werden muss, für deren Sicherheit nicht garantiert werden kann, hier also z. B. weil sowohl der Dienstleister als auch dessen Personal Zugriff auf die oder jede jeweilige Vorrichtung hat. Bei Verwendung dieser Ansätze zum Verbergen des Schlüssels in dem Entschlüsselungsalgorithmus kann also von einer hohen Sicherheit des Schlüssels ausgegangen werden.

Weiter bevorzugt ist vorgesehen, dass der Entschlüsselungsalgorithmus auf einen, mit der jeweiligen Vorrichtung kombinierbarem Speicher, z.B. einen so genanntem Flash-Speicher, insbesondere Flash-EPROM, übertragen wird und der Vorrichtung durch Anschluss eines solchen Speichers bereitgestellt wird. Der Vorteil dieses Aspekts der Erfindung besteht darin, dass, nachdem der Entschlüsselungsalgorithmus unabhängig von der Vorrichtung generiert wurde, dieser durch Übertragung auf einen Speicher direkt mit der jeweiligen Vorrichtung kombinierbar ist, ohne dass dafür eine kommunikative Verbindung zwischen der Funktionalität, welche die Generierung des Entschlüsselungsalgorithmus übernimmt, und der jeweiligen Vorrichtung bestehen muss, die ggf. von einem Dritten separat attackiert werden könnte.

Besonders bevorzugt ist vorgesehen, dass der Entschlüsselungsalgorithmus nur auf einer Vorrichtung mit einer Kennzeichnung ausführbar ist, welche die bei der Verschlüsselung verwendete Kennzeichnung hat. Dieser Aspekt der Erfindung gewährleistet, dass selbst, wenn ein unberechtigter Dritter sich den Entschlüsselungsalgorithmus beschafft, z.B. stiehlt oder kopiert, er diesen dennoch nicht ausführen kann, wenn eine dazu verwendete Hardware nicht die gleiche Kennzeichnung aufweist wie die Vorrichtung, für die der Entschlüsselungsalgorithmus ursprünglich vorgesehen war. Wenn als Kennzeichnung geeignete Fingerprint-Daten, z.B. eine eindeutige MAC-Adresse oder dergleichen, verwendet wurden, ist mit hoher Sicherheit gewährleistet, dass dem Dritten eine Ausführung des Entschlüsselungsalgorithmus nicht oder nur mit unverhältnismäßig hohem Aufwand möglich ist.

Bevorzugt ist die Vorrichtung, mit welcher die jeweiligen Daten in der oben beschriebenen Art und Weise zum Schutz gegen unberechtigten Zugriff kombiniert werden, ein Antrieb. Die Daten sind dann Steuerdaten zur Ansteuerung dieses Antriebs im Hinblick auf Sollwerte, wie z.B. Geschwindigkeit, Position, Lage und so weiter. In einem solchen Szenario, bei dem es sich also bei zumindest einzelnen Vorrichtungen um Antriebe handelt, können Daten, die geistiges Eigentum eines Rechteinhabers verkörpern, in einer vergleichsweise produktionsnahen Form, also z.B. in Form von Sollwerten, direkt bei den einzelnen Vorrichtungen vorliegen, ohne dass bei einem unberechtigten Zugriff auf diese zu besorgen wäre, dass unmittelbar auch das jeweilige geistige Eigentum an Dritte gelangt oder dass ein Programm mit derartigen Daten auf einer anderen Vorrichtung ausführbar ist, z.B. in der Absicht, festgelegte Mengenbeschränkungen zu umgehen.

Das Verfahren wie hier und im Folgenden beschrieben wird einerseits durch einen Rechteagenten und andererseits durch eine bei der jeweiligen Vorrichtung implementierte Funktionalität ausgeführt. Damit wird die o. g. Aufgabe auch durch den Rechteagenten und die bei der jeweiligen Vorrichtung implementierte Funktionalität gelöst. Soweit der Rechteagent betroffen ist, handelt es sich um eine Funktionalität zur Ausführung derjenigen Schritte des Verfahrens, die nicht auf Seiten der jeweiligen Vorrichtung ausgeführt werden. Der Rechteagent umfasst also Mittel zum Bestimmen einer sich auf die Vorrichtung beziehenden Kennzeichnung, Mittel zum Bestimmen einer sich auf die Vorrichtung nach Art eines Fingerprints beziehenden Kennzeichnung, Mittel zum Generieren eines ersten und eines zweiten Schlüssels, wobei der erste Schlüssel anhand der Kennzeichnung generiert wird und der zweite Schlüssel als geheimer Schlüssel unabhängig von der Kennzeichnung ist, sodann Mittel zum Generieren eines zur Verwendung des zweiten und geheimen Schlüssels vorgesehenen Entschlüsselungsalgorithmus und zum Bereitstellen des Entschlüsselungsalgorithmus auch für die Vorrichtung, weiterhin Mittel zum Verschlüsseln eines einen Zugriff auf die Daten erlaubenden Rechteobjekts mit dem ersten Schlüssel und dem, dem Entschlüsselungsalgorithmus zugrunde liegenden zweiten, geheimen Schlüssel sowie Mittel zum Übermitteln der Daten und des Rechteobjekts an die Vorrichtung. Bezüglich der Vorteile dieses Aspekts der Erfindung wird auf die weiter oben im Zusammenhang mit der Erörterung des Verfahrens erwähnten Vorteile verwiesen. Besonders vorteilhaft ist vorgesehen, dass die Funktionalität, also der Rechteagent, als zum Rechtemanagement zweckbestimmte Einheit, insbesondere als dezentrale Netzwerkkomponente in einer Produktionsumgebung mit einer Mehrzahl von Vorrichtungen/Produktionsmitteln fungiert.

Soweit die vorrichtungsseitige Funktionalität zur Ausführung der entsprechenden Schritte des eingangs genannten Verfahrens betroffen ist, umfasst diese Mittel zum Entschlüsseln des Rechteobjekts mit dem aus der Kennzeichnung der jeweiligen Vorrichtung generieren Schlüssel und dem der Vorrichtung bereitgestellten Entschlüsselungsalgorithmus sowie Mittel zum Entschlüsseln der Daten mit einem von dem entschlüsselten Rechteobjekt umfassten Schlüssel.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Szenario, mit dem sich die Erfindung befasst, nämlich einen Rechteinhabereinflussbereich mit geis- tigem Eigentum des Rechteinhabers und einem Dienst- leistereinflussbereich mit Vorrichtungen, die z.B. zur Produktion von Gütern entsprechend dem geistigem Eigentum in Betracht kommen, so dass das geistige Ei- gentum in den Dienstleistereinflussbereich übergehen muss,
- FIG 2: das Szenario gemäß FIG 1 mit weiteren Details,
- FIG 3: die Verschlüsselung einer geistiges Eigentum des Rechteinhabers umfassenden Produktbeschreibung mit- tels eines Rechteobjekts und
- FIG 4: ein Blockdiagramm zu dem erfindungsgemäßen Verfahren zum Kombinieren von Daten mit einer zur Verarbeitung der Daten vorgesehenen Vorrichtung.

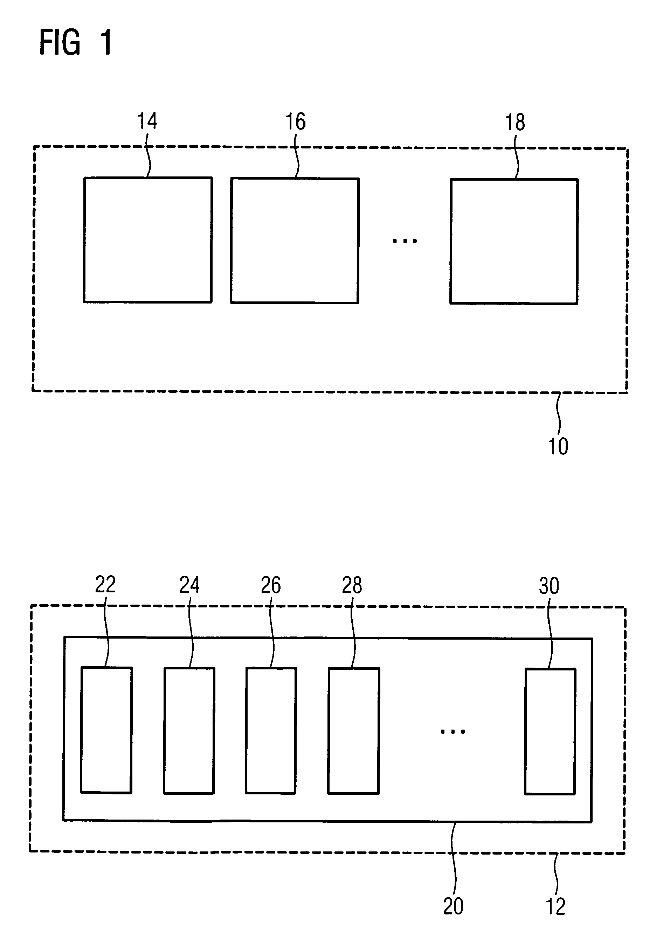

FIG 1 zeigt schematisch vereinfacht ein Szenario, mit dem sich die Erfindung befasst. Dabei sind im oberen Teil der Darstellung schematisch ein Rechteinhabereinflussbereich 10 und im unteren Bereich ein Dienstleistereinflussbereich 12 dargestellt. Der Rechteinhaber verfügt in seinem Einflussbereich 10 über geistiges Eigentum 14, 16, 18, z. B. Baupläne mit Maßen und dergleichen, für die Herstellung eines Produkts, z.B. eines Automobilteils. Im angenommenen Szenario soll davon ausgegangen werden, dass der Rechteinhaber die Herstellung des Produkts nicht selbst vornehmen kann oder will. Zu diesem Zweck ist also ein Teil des geistigen Eigentums 14-18 des Rechteinhabers an einen Dienstleister zu übermitteln. Der Dienstleister verfügt in seinem Einflussbereich 12 z.B. über eine Produktionsanlage 20 mit im Folgenden als Vorrichtungen 22, 24, 26, 28, 30 bezeichneten Produktionsmitteln. Neben einem produzierenden Dienstleister kommt als Dienstleister genauso z.B. ein Ingenieurbüro in Betracht, das keine Herstellung des Produkts vornimmt, sondern produktionsvorbereitend oder produktionsbegleitend Analysen vornimmt, z.B. Strömungsanalysen und dergleichen. Diese und andere denkbare Dienstleistungen und für deren Erbringung vorgesehene Vorrichtungen 22-30 sollen als von der nachfolgenden Beschreibung umfasst gelten, wenn auf "Produktion", die Anlage 20 und die oder jede davon umfasste Vorrichtung 22-30 Bezug genommen wird.

Für die Veranlassung einer Produktion eines Teils durch Dritte hat bisher der Rechteinhaber aus seinem Einflussbereich 10 dem Betreiber der Anlage 20 Elemente seines geistigen Eigentums 14-18 in dessen Einflussbereich 12 übergeben. Dazu kommt grundsätzlich jedes Medium in Betracht und wenn historisch zunächst von der Übergabe von z.B. Konstruktionsplänen auszugehen ist, werden heute üblicherweise elektronische Daten, also z.B. CAD, CAM, CAE-Daten usw., ausgetauscht.

Mit der Verfügbarkeit des geistigen Eigentums 14-18 des Rechteinhabers im Einflussbereich 12 des Betreibers der Anlage 20 kann dieser grundsätzlich nach eigenem Gutdünken mit dem fremden geistigen Eigentum 14-18 verfahren. Die Einflussmöglichkeit des Rechteinhabers ist auf vertragliche Vereinbarungen mit dem Betreiber der Anlage 20 und deren Durchsetzbarkeit diesem gegenüber begrenzt, was für den Rechteinhaber oftmals unzureichend ist.

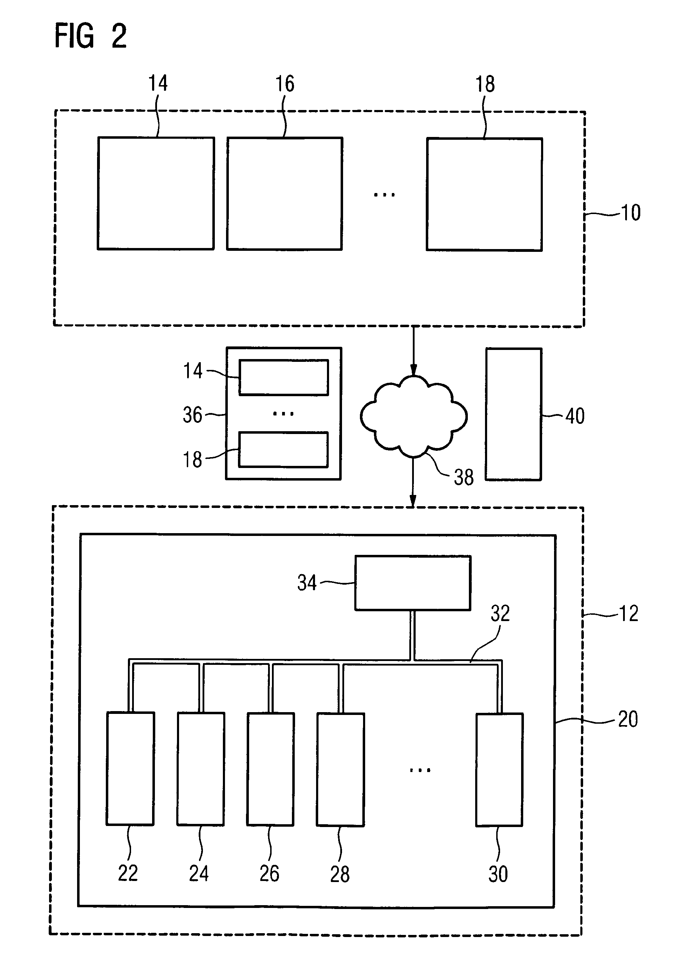

Die Darstellung in FIG 2 wiederholt wesentliche Aspekte aus FIG 1, wobei der Einflussbereich 10 des Rechteinhabers auch als Darstellung des Rechteinhabers selbst und entsprechend der Einflussbereich 12 des Betreibers der Anlage 20 auch als schematische Darstellung des Betreibers selbst aufgefasst werden kann. Entsprechend werden die eingeführten Bezugszeichen im Folgenden auch für den Rechteinhaber 10 und den Betreiber/Auftragnehmer 12 verwendet.

Auf Betreiberseite besteht zwischen den von der Anlage 20 umfassten Vorrichtungen 22-30 eine kommunikative Verbindung für eine Übermittlung von Daten an diese, aber auch für einen Datenaustausch untereinander, z.B. nach Art eines Busses 32, insbesondere eines Feldbusses. Weiterhin ist der Anlage 20 zumindest eine übergeordnete Einheit nach Art einer Leitstation oder eines so genannten Servers zugeordnet, die zumindest die Funktionalität eines Rechteagenten umfasst und entsprechend im Folgenden kurz als Rechteagent 34 bezeichnet wird. Der Rechteagent 34 kann abweichend von der Darstellung in FIG 2 auch von einer der Vorrichtungen 22-30 umfasst sein und in einem jeder Vorrichtung 22-30 zugeordneten, aber nicht separat dargestellten Steuerungsteil implementiert sein. In jedem Fall fungiert der Rechteagent 34 als zum Rechtemanagement zweckbestimmte Einheit in einer Produktionsumgebung, nämlich der Produktionsumgebung mit einer Anzahl kommunikativ verbundener Vorrichtungen 22-30. Wenn der Rechteagent 34 als eigenständiger Teilnehmer am Bus 32 realisiert ist, handelt es sich um einen Rechteagenten 34 in Form einer dezentralen Netzwerkkomponente.

Wenn der Rechteinhaber 10 durch den Betreiber 12 (Auftragnehmer) gemäß dem eingangs skizzierten Szenario ein Produkt z.B. in einer bestimmten Stückzahl fertigen lassen will, übermittelt er einen diesbezüglichen Teil seines geistigen Eigentums 14-18 in Form einer Produktbeschreibung 36. Die Übermittlung der Produktbeschreibung 36 erfolgt auf elektronischem Wege, z.B. durch Verwendung heute gebräuchlicher Wege zum Datenaustausch, insbesondere das Internet 38. Für eine derartige Übertragung ist die Produktbeschreibung 36 verschlüsselt, und zwar unter Verwendung eines Rechteobjekts 40. Produktbeschreibung 36 und Rechteobjekt 40 werden vom Rechteagenten 34 verarbeitet, derart, dass der Rechteagent 34 mit dem Rechteobjekt 40 auf die Produktbeschreibung 36 zugreift und darin enthaltene Daten an die oder einzelne Vorrichtungen 22-30 weiterleitet.

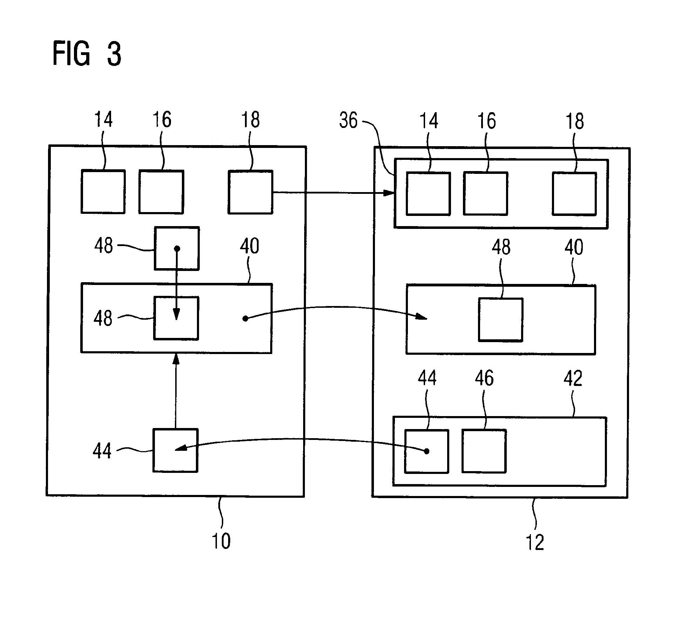

Im Folgenden wird zunächst anhand von FIG 3 die Verschlüsselung der Produktbeschreibung 36 mittels eines Rechteobjekts 40 näher erläutert: Auf Seiten des Dienstleisters 12 wird zunächst ein Schlüsselpaar 42 erzeugt, von dem ein erster Schlüsselteil 44 an den Rechteinhaber 10 übermittelt wird. Der zugehörige zweite Schlüsselteil 46 verbleibt beim Dienstleister 12. Bei dem Schlüsselpaar 42 handelt es sich bevorzugt um einen asymmetrischen Schlüssel und der dem Rechteinhaber 10 übermittelte erste Schlüsselteil 44 ist bevorzugt der öffentliche Teil eines solchen Schlüsselpaars 42. Der Rechteinhaber 10 verschlüsselt das zu übermittelnde geistige Eigentum 14-18 mit einem von ihm gewählten Schlüssel 48 und übermittelt das auf diese Weise verschlüsselte geistige Eigentum 14-18 als Produktbeschreibung 36 an den Dienstleister 12. Ein zu der Produktbeschreibung 36 gehöriges Rechteobjekt 40 enthält diesen Schlüssel 48, ist seinerseits aber mit dem zuvor vom Dienstleister 12 erhaltenen Schlüssel 44 verschlüsselt. Das Rechteobjekt 40 wird ebenfalls zum Dienstleister 12 übermittelt, wobei der Dienstleister 12 als berechtigter Empfänger noch über den zweiten Schlüsselteil 46 verfügt, mit dem eine Entschlüsselung des Rechteobjekts 40 und damit ein Zugriff auf den davon umfassten Schlüssel 48 möglich ist. Mit diesem Schlüssel 48 kann auch auf das von der Produktbeschreibung 36 umfasste geistige Eigentum 14-18 zugegriffen werden. Die zuvor beschriebenen Maßnahmen und Verfahrensschritte laufen zumindest auf Seiten des Dienstleisters 12 automatisch ab und zwar unter Kontrolle des Rechteagenten 34. Der vom Rechteinhaber 10 zur Verschlüsselung des geistigen Eigentums 14-18 gewählte Schlüssel 48 bleibt damit geheim und ist auch für natürliche Personen auf Seiten des Dienstleisters 12 normalerweise nicht zugänglich.

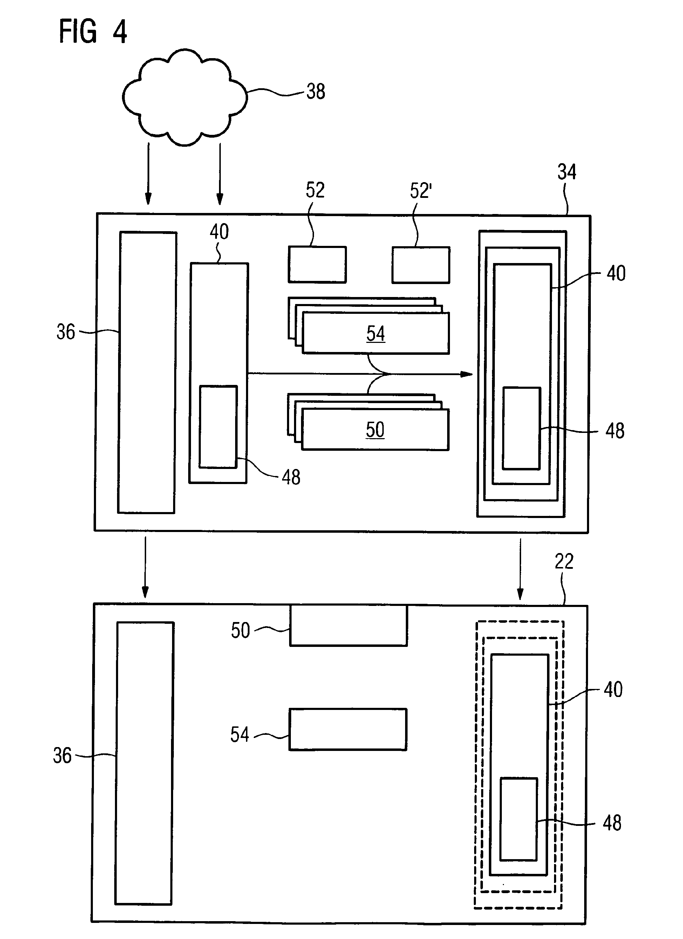

Das Rechteobjekt 40 ist an die Produktbeschreibung 36 gebunden und definiert die dem Dienstleister 12 im Rahmen des zwischen Rechteinhaber 10 und Dienstleister 12 geschlossenen oder zu schließenden Vertrags zugelassenen oder eingeräumten Nutzungsmöglichkeiten der Produktbeschreibung 36. Zur bestmöglichen Absicherung des geistigen Eigentums 14-18 des Rechteinhabers 10 schlägt die Erfindung jetzt Maßnahmen vor, wie sichergestellt werden kann, dass einzelne Dienstleistungen nur auf ausgewählten Vorrichtungen 22-30 (FIG 2) und dort auch nur in dem vom Rechteinhaber 10 zugelassenen Umfang erbracht werden können. Mit anderen Worten muss sichergestellt sein, dass die Produktbeschreibung 36 oder jeweils relevante Teile davon nur auf einer zugelassenen Vorrichtung 22-30 verwendbar sind. Wie diese Bindung der Produktbeschreibung an jeweils genau eine Vorrichtung 22-30 mit dem Ansatz gemäß der Erfindung gewährleistet werden kann, wird mit Bezug auf FIG 4 erläutert.

Der Rechteagent 34 "kennt" oder erhält von jeder angeschlossenen Vorrichtung 22 eine Kennzeichnung 50 nach Art eines Fingerprints, im Folgenden auch nur als "Fingerprint 50" bezeichnet. Die als Fingerprint fungierende Kennzeichnung 50 geht auf Daten zurück, die die jeweilige Vorrichtung 22 von anderen Vorrichtungen 22-30 (FIG 2) unterscheidbar macht. Als derartige Daten kommen z.B. eine Netzwerkadresse der jeweiligen Vorrichtung 22-30 am Bus 32 (FIG 2) oder ein Code einer von der Vorrichtung 22 umfassten Verarbeitungseinheit nach Art eines Prozessors oder dergleichen, also eine CPU-Id, in Betracht. Mehrere derartige Daten können kombiniert werden um den Fingerprint 50 noch eindeutiger zu machen.

Der Rechteagent 34 generiert einen ersten und einen zweiten symmetrischen Schlüssel 52, 52'. Der erste Schlüssel 52 wird dabei anhand der Kennzeichnung 50 generiert, entspricht also z.B. der Kennzeichnung oder wird aus dieser auf Grundlage einer vorgegebenen Bildungsregel gewonnen. Der zweite Schlüssel 52' ist demgegenüber als geheimer Schlüssel unabhängig von der Kennzeichnung 50. Des Weiteren generiert der Rechteagent 34 einen zur Verwendung jedes zweiten und geheimen Schlüssels 52' vorgesehenen Entschlüsselungsalgorithmus 54. Dabei umfasst der Entschlüsselungsalgorithmus 54 selbst den zum Entschlüsseln vorgesehenen zweiten Schlüssel 52'. Der jeweilige Entschlüsselungsalgorithmus 54 wird den einzelnen Vorrichtungen 22-30 übermittelt und mit diesen zum Betrieb verbunden.

Im Betrieb empfängt der Rechteagent 34 eine vom Rechteinhaber 10 (FIG 2) versandte und von diesem mit dem dem Dienstleister 12 (FIG 2) nicht bekannten Schlüssel 48 verschlüsselte Produktbeschreibung 36. Für den autorisierten Zugriff auf die Produktbeschreibung 36 ist das unabhängig davon empfangene Rechteobjekt 40 erforderlich, das seinerseits verschlüsselt ist (vgl. Darstellung in FIG 3 und zugehörige Erläuterung) und den Schlüssel 48 zum Zugriff auf die von der Produktbeschreibung 36 umfassten Daten enthält.

Wenn nun der Rechteagent 34 mit seinem zweiten Schlüsselteil 46 (FIG 2) das Rechteobjekt 40 entschlüsselt und mit dem dann zugänglichen, darin enthaltenen Schlüssel 48 die Produktbeschreibung 36 entschlüsselt und diese direkt an eine Vorrichtung 22 weiterleitet, liegt das von der Produktbeschreibung 36 umfasste geistige Eigentum 14-18 dort ungeschützt vor. Um dies zu verhindern, ist vorgesehen, dass der Rechteagent 34 eine Verschlüsselung des Rechteobjekts 40 vornimmt und der oder jeder Vorrichtung 22 anschließend das so verschlüsselte Rechteobjekt 40 übermittelt und die Produktbeschreibung 36 in der ursprünglich erhaltenen, verschlüsselten Form weiterleitet.

Die Verschlüsselung des Rechteobjekts 40 durch den Rechteagenten 34 ist dabei zweistufig (in FIG 4 durch den doppelten Rahmen um das Rechteobjekt 40 illustriert). Zum einen ist das Rechteobjekt 40 mit dem vom Fingerprint 50 abgeleiteten symmetrischen Schlüssel 52 derjenigen Vorrichtung 22 verschlüsselt (erster oder innerer Rahmen), an die das Rechteobjekt 40 übermittelt werden soll. Zum anderen ist das Rechteobjekt 40 zusätzlich mit dem zweiten und geheimen symmetrischen Schlüssel 52' verschlüsselt (zweiter oder äußerer Rahmen). Bevorzugt wird die Verschlüsselung dabei in der beschriebenen Reihenfolge vorgenommen, also zunächst mit dem vom Fingerprint 50 abgeleiteten Schlüssel 52 und danach mit dem zweiten Schlüssel 52'. Die sich damit ergebende Kapselung (dargestellt durch die erwähnten Rahmen) hat den Vorteil, dass der Fingerprint 50, auch wenn ein Unberechtigter sich diesen bei der jeweiligen Vorrichtung beschafft, nicht ausreicht um das Rechteobjekt 40 zu entschlüsseln. Zusätzlich - oder bei der oben als bevorzugt herausgestellten Reihenfolge zunächst - ist nämlich eine Entschlüsselung mit dem Entschlüsselungsalgorithmus 54 erforderlich. Der dafür erforderliche zweite Schlüssel 52' ist zwar in dem Entschlüsselungsalgorithmus 54 selbst enthalten, aber darin entsprechend an sich bekannter Ansätze verborgen, z. B. White-Box-Kryptographie (Chow, Eisen, van Oorschot; 2002).

Im Ergebnis führt dies dazu, dass durch die Verwendung des Fingerprints eine Bindung an die intendierte Vorrichtung erzeugt wird, und dass zumindest die Verschlüsselung mit dem zweiten und geheimen Schlüssel 52' nicht ohne erheblichen Aufwand aufgehoben werden kann. Also führt für einen Angreifer weder ein unberechtigtes Auslesen des Fingerprints 50 noch ein unberechtigtes Auslesen des Entschlüsselungsalgorithmus 54 und ein späterer Versuch, diesen in einer anderen Umgebung, z.B. einer an sich ähnlichen Vorrichtung, die aber einen anderen Fingerprint 50 hat, ausführen zu lassen, zum Erfolg.

Wenn eine der Vorrichtungen 22 eine ursprünglich vom Rechteinhaber 10 erhaltene Produktbeschreibung 36 oder relevante Teile davon empfängt, ist das Rechteobjekt 40 durch den Rechteagenten 34 also zweistufig verschlüsselt. Das Rechteobjekt 40 enthält nach wie vor den Schlüssel 48, der zur Entschlüsselung der übermittelten Produktbeschreibung 36, also des geistigen Eigentums 14-18, erforderlich ist. Sobald das Rechteobjekt 40 und das geistige Eigentum 14-18 bei der Vorrichtung 22-30 vorliegen, erfolgt zunächst eine Entschlüsselung (gestrichelt gezeichneter äußerer Rahmen) des Rechteobjekts 40 mit dem vom Rechteagenten 34 generierten Entschlüsselungsalgorithmus 54 (der den dafür zu verwendenden Schlüssel selbst enthält, und zwar in "versteckter Form" - White-Box). Sodann wird die nächste Stufe der Verschlüsselung aufgelöst (gestrichelt gezeichneter innerer Rahmen), und zwar mit dem vom Fingerprint 50 der jeweiligen Vorrichtung 22-30 abgeleiteten, ersten Schlüssel 52. Damit ist ein Zugriff auf das Rechteobjekt 40 und den darin enthaltenen Schlüssel 48 möglich. Mit diesem Schlüssel 48 ist in letzter Stufe der Zugriff auf das von der Produktbeschreibung 36 umfasste geistige Eigentum 14-18 möglich.

Damit lässt sich die Erfindung kurz wie folgt darstellen: Es werden ein Verfahren und eine zumindest zweiteilige Funktionalität zum Kombinieren von Daten mit einer zur Verarbeitung der Daten vorgesehenen Vorrichtung mit folgenden Schritten angegeben: Bestimmen einer sich auf die Vorrichtung 22-30 beziehenden Kennzeichnung 50; Generieren eines ersten und zweiten Schlüssels 52, 52', wobei der erste Schlüssel 52 anhand der Kennzeichnung 50 generiert wird und der zweite Schlüssel 52' als geheimer Schlüssel unabhängig von der Kennzeichnung 50 ist; Generieren eines zur Verwendung des zweiten Schlüssels 52' vorgesehenen Entschlüsselungsalgorithmus 54 und Bereitstellen des Entschlüsselungsalgorithmus 54 auch für die Vorrichtung 22-30; Verschlüsseln eines einen Zugriff auf die Daten erlaubenden Rechteobjekts 40 mit dem ersten Schlüssel 52 und den dem Entschlüsselungsalgorithmus 54 zugrunde liegenden zweiten Schlüssel 52'; Übermitteln der Daten und des Rechteobjekts 40 an die Vorrichtung 22-30; Entschlüsseln des Rechteobjekts 40 durch die Vorrichtung 22-30 mittels des aus deren Kennzeichnung 50 erzeugten Schlüssels und dem dieser bereitgestellten Entschlüsselungsalgorithmus 54 und Entschlüsselung der Daten mit einem von dem entschlüsselten Rechteobjekt 40 umfassten Schlüssel 48. Diese mehrstufige Verschlüsselung des Rechteobjekts 40 hat den Vorteil, dass auch bei einem unberechtigten Zugriff auf die jeweilige Vorrichtung 22-30 das von den Daten umfasste geistige Eigentum 14-18 nicht ohne unverhältnismäßig hohen Aufwand erhältlich ist.

## Patentansprüche

1. Verfahren zum Kombinieren von Daten mit einer zur Verarbeitung der Daten vorgesehen Vorrichtung (22-30), mit folgenden Schritten:
Bestimmen einer sich auf die Vorrichtung (22-30) beziehenden Kennzeichnung (50);
Generieren eines ersten und eines zweiten Schlüssels (52, 52'), wobei der erste Schlüssel (52) anhand der Kennzeichnung (50) generiert wird und der zweite Schlüssel (52') als geheimer Schlüssel unabhängig von der Kennzeichnung (50) ist; Generieren eines zur Verwendung des zweiten Schlüssels (52') vorgesehenen Entschlüsselungsalgorithmus (54) und Bereitstellen des Entschlüsselungsalgorithmus (54) auch für die Vorrichtung (22-30);
Verschlüsseln eines einen Zugriff auf die Daten erlaubenden Rechteobjekts (40) mit dem ersten Schlüssel (52) und dem dem Entschlüsselungsalgorithmus (54) zugrunde liegenden zweiten, geheimen Schlüssel (52');
Übermitteln der Daten und des Rechteobjekts (40) an die Vorrichtung (22-30);
Entschlüsseln des Rechteobjekts (40) durch die Vorrichtung (22-30) mittels deren Kennzeichnung (50) und dem dieser bereitgestellten Entschlüsselungsalgorithmus (54) und Entschlüsselung der Daten mit einem von dem entschlüsselten Rechteobjekt (40) umfassten Schlüssel (48).

2. Verfahren nach Anspruch 1, wobei der Entschlüsselungsalgorithmus (54) den zugrunde liegenden, geheimen zweiten Schlüssel (52') in verborgener Form selbst umfasst.

3. Verfahren nach Anspruch 2, wobei der geheime zweite Schlüssel (52') in dem Entschlüsselungsalgorithmus (54) nach Methoden der White-Box-Kryptographie verborgen ist.

4. Verfahren nach einem der Ansprüche 1, 2 oder 3, wobei der Entschlüsselungsalgorithmus (54) auf einen mit der jeweiligen Vorrichtung (22-30) kombinierbaren Speicher übertragen wird und der Vorrichtung (22-30) durch Anschluss des Speichers bereitgestellt wird.

5. Verfahren nach Anspruch 4, wobei der Entschlüsselungsalgorithmus (54) nur auf einer Vorrichtung mit einer Kennzeichnung (50) ausführbar ist, welche die bei der Verschlüsselung verwendete Kennzeichnung (50) hat.

6. Verfahren nach einem der vorangehenden Ansprüche, wobei die Daten als geistiges Eigentum (14-18) eines Rechteinhabers (10) eine Produktbeschreibung (36) umfassen.

7. Verfahren nach einem der vorangehenden Ansprüche, wobei die Vorrichtung (22-28) ein Antrieb ist.

8. Funktionalität zur Ausführung einzelner Schritte des Verfahrens nach einem der Ansprüche 1 bis 3, mit
Mitteln zum Bestimmen einer sich auf die Vorrichtung (22-30) beziehenden Kennzeichnung (50);
Mitteln zum Generieren eines ersten und eines zweiten Schlüssels (52,52'), wobei der erste Schlüssel (52) anhand der Kennzeichnung (50) generiert wird und der zweite Schlüssel (52') als geheimer Schlüssel unabhängig von der Kennzeichnung (50) ist;
Mitteln zum Generieren eines zur Verwendung des zweiten Schlüssels (52') vorgesehenen Entschlüsselungsalgorithmus (54) und Bereitstellen des Entschlüsselungsalgorithmus (54) auch für die Vorrichtung (22-30);
Mitteln zum Verschlüsseln eines einen Zugriff auf die Daten erlaubenden Rechteobjekts (40) mit dem ersten Schlüssel (52) und dem dem Entschlüsselungsalgorithmus (54) zugrunde liegenden zweiten, geheimen Schlüssel (52') und
Mitteln zum Übermitteln der Daten und des Rechteobjekts (40) an die Vorrichtung (22-30).

9. Funktionalität nach Anspruch 8, welche als zum Rechtemanagement zweckbestimmte Einheit - Rechteagent (34) -, insbesondere als dezentrale Netzwerkkomponente, in einer Produktionsumgebung fungiert.

10. Funktionalität zur Ausführung einzelner Schritte des Verfahrens nach einem der Ansprüche 1 bis 3, mit Mitteln zum Entschlüsseln des Rechteobjekts (40) durch die Vorrichtung (22-30) mittels des aus deren Kennzeichnung (50) generierten Schlüssels und dem dieser bereitgestellten Entschlüsselungsalgorithmus (54) und
Entschlüsselung der Daten mit einem von dem entschlüsselten Rechteobjekt (40) umfassten Schlüssel (48).

11. Computerprogramm zur Ausführung eines Verfahrens gemäß einem der Ansprüche 1 bis 7.

12. Datenträger mit einem Computerprogramm nach Anspruch 11 oder Computersystem, auf dem ein derartiges Computerprogramm geladen ist.
